# FASCICULE DE BREVET EUROPEEN

(11) **EP 3 539 879 B1**
(45) Date de publication et mention de la délivrance du brevet: **29.04.2020**
(21) Numéro de dépôt: 19159020.7
(22) Date de dépôt: 25.02.2019
(51) Int. Cl.: B64D 29/06, E05D 5/06, B64D 29/08

(54) **TURBOREACTEUR DOUBLE FLUX POUR UN AERONEF AVEC UNE OUVERTURE EQUIPEE D'UNE CHARNIERE AVEC FERRURE EN COL DE CYGNE**
DOPPELSTRÖMUNG-TURBOTRIEBWERK FÜR EIN LUFTFAHRZEUG MIT EINER ÖFFNUNG, DIE MIT EINEM SCHARNIER MIT SCHWANENHALSBESCHLAG AUSGESTATTET IST
DUAL-FLOW TURBOJET ENGINE FOR AN AIRCRAFT WITH AN OPENING PROVIDED WITH A HINGE WITH GOOSENECK FITTING

(30) Priorité: 13.03.2018 FR 1852163
(43) Date de publication de la demande: 18.09.2019
(73) Titulaire: Airbus Operations S.A.S., 31060 Toulouse (FR)
(72) Inventeur: GELIOT, Jean, 31400 TOULOUSE (FR); SOULIE, Adeline, 82600 VERDUN SUR GARONNE (FR)
(74) Mandataire: Gicquel, Olivier Yves Gérard

(56) Documents cités:
- EP-A1- 0 299 856
- EP-A2- 0 317 037
- EP-A2- 2 336 030
- US-A- 2 763 900
- US-A1- 2006 061 108
- US-A1- 2017 174 354

## Description

La présente invention concerne un turboréacteur double flux pour un aéronef, ledit turboréacteur double flux comprenant un capot monté mobile en rotation par rapport à une structure fixe sur des charnières avec ferrure en col de cygne. La présente invention concerne également un aéronef comportant au moins un tel turboréacteur double flux.

Un aéronef comporte classiquement au moins une aile sous laquelle est fixé un mât auquel est fixé un turboréacteur double flux.

Un turboréacteur double flux de l'état de la technique comporte un noyau central constituant le moteur avec une chambre de combustion, une soufflante qui est à l'avant du noyau central et un capot intérieur qui constitue la paroi intérieure d'une veine secondaire et qui s'étend autour du noyau central, et un capot extérieur qui constitue la paroi extérieure de la veine secondaire et qui s'étend autour du capot intérieur.

Pour assurer la maintenance du turboréacteur double flux, le capot intérieur et le capot extérieur comportent chacun au moins un capot qui est monté mobile en rotation sur une structure fixe du turboréacteur par l'intermédiaire de charnières.

Le capot intérieur présente ainsi une partie fixe solidaire de la structure fixe et un capot mobile. La partie fixe présente un premier bord et le capot mobile présente un deuxième bord. Lorsque le capot mobile est en position fermée, le deuxième bord s'étend le long du premier bord et le capot mobile prolonge la partie fixe afin de former une surface continue afin d'assurer une étanchéité. Lorsque le capot mobile est en position ouverte, le deuxième bord est écarté du premier bord et le capot mobile est écarté vers l'extérieur de la partie fixe.

Concernant le capot mobile, il est souhaitable que ses charnières n'influent pas sur l'écoulement de l'air dans la veine secondaire. Pour cela, elles sont cachées du côté du noyau central. En outre, du fait de la présence du premier bord, chaque charnière doit prendre une forme qui lui permet de faire le tour dudit premier bord. Du fait de ces différentes contraintes, chaque charnière prend la forme d'un col de cygne.

Si ces charnières avec ferrure en col de cygne permettent d'assurer un bon écoulement de l'air, les ferrures en col de cygne qui sont articulées à leurs deux extrémités peuvent vibrer lorsque le capot mobile est en position fermée.

On connaît de la demande de brevet EP2336030, un turboréacteur double flux qui présente un capot monté mobile en rotation par l'intermédiaire d'au moins une charnière avec ferrure en col de cygne et qui comporte, pour chaque ferrure en col de cygne, des moyens anti-vibrations de type boulon qui sont prévus pour exercer une pression contre la ferrure en col de cygne lorsque le capot mobile est en position fermée. Le pression exercée est fonction de la force de serrage appliquée au boulon.

Un objet de l'invention est de proposer une autre alternative aux moyens anti-vibrations décrits dans la demande de brevet susmentionnée.

A cet effet, est proposé un turboréacteur double flux pour un aéronef tel que revendiqué dans la revendication 1.

La présence des moyens anti-vibrations empêche la vibration de la ferrure en col de cygne lorsque le capot mobile est en position fermée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef présentant au moins un turboréacteur double flux selon l'invention,
la Fig. 2 est une vue en perspective et de face d'un turboréacteur double flux présentant un capot mobile en position ouverte et monté sur des charnières avec ferrure en col de cygne selon l'invention, et
la Fig. 3 est une vue de côté d'une charnière avec ferrure en col de cygne selon un mode de réalisation de l'invention.

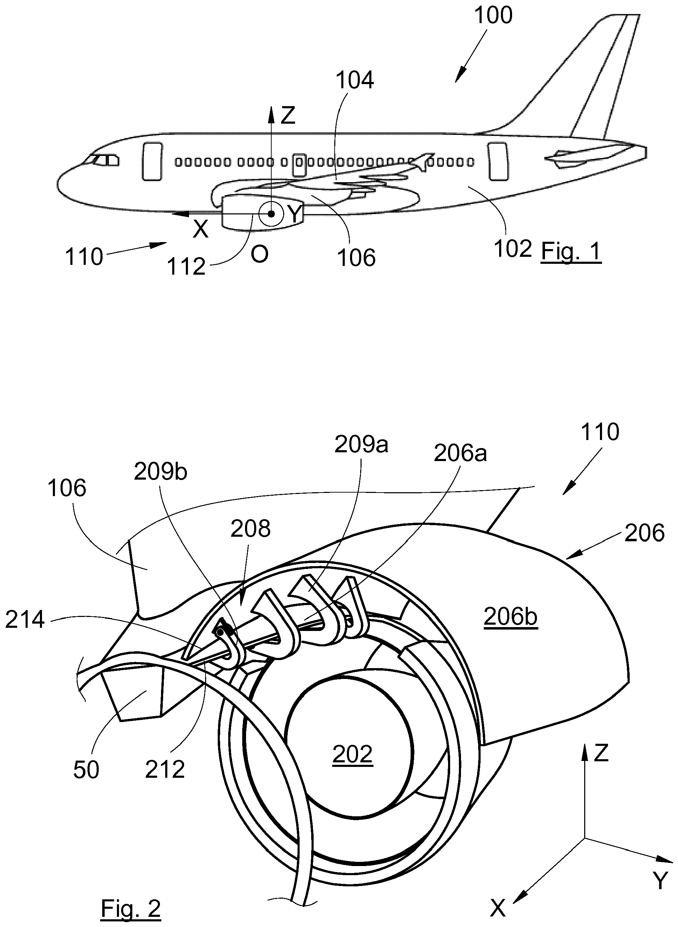

Dans la description qui suit, les termes relatifs à une position sont pris en référence à un aéronef en position d'avancement normal, c'est-à-dire comme il est représenté sur la Fig. 1.

La Fig. 1 montre un aéronef 100 qui comporte un fuselage 102 présentant une aile 104 de chaque côté. Sous chaque aile 104 est fixé au moins un turboréacteur double flux 110 par l'intermédiaire d'un mât 106.

Dans toute la description qui va suivre, par convention, la direction X correspond à la direction longitudinale du turboréacteur double flux 110, cette direction étant parallèle à l'axe longitudinal du turboréacteur double flux 110. D'autre part, la direction Y correspond à la direction orientée transversalement par rapport au turboréacteur double flux 110, et la direction Z correspond à la direction verticale ou à la hauteur, ces trois directions X, Y, Z étant orthogonales entre elles.

La Fig. 2 montre le turboréacteur double flux 110 dont la constitution est similaire à celle du turboréacteur double flux de l'état de la technique et il comporte un noyau central 202 constituant le moteur avec une chambre de combustion, une soufflante et un capot intérieur 206 qui constitue la paroi intérieure d'une veine secondaire s'étendant autour du noyau central 202.

Le turboréacteur double flux 110 comporte également un capot extérieur 112 visible sur la Fig. 1, qui constitue la paroi extérieure de la veine secondaire et qui s'étend autour du capot intérieur 206.

Classiquement, le capot extérieur 112 est monté mobile en rotation sur le mât 106 ou sur une structure fixe 50 du turboréacteur double flux 110 par l'intermédiaire de charnières.

Le capot intérieur 206 comporte une partie fixe 206a qui est solidaire d'une structure fixe 50 du turboréacteur double flux 110, et un capot mobile 206b qui est monté mobile en rotation sur la structure fixe 50 du turboréacteur double flux 110 par l'intermédiaire d'au moins une charnière avec ferrure en col de cygne 208. L'axe de rotation du capot mobile 206b et donc des charnières avec ferrure en col de cygne 208 est globalement parallèle à la direction longitudinale X. Chaque charnière avec ferrure en col de cygne 208 comporte ici une ferrure en col de cygne 209a-b.

La partie fixe 206a présente un premier bord 212 et le capot mobile 206b présente un deuxième bord 214. Lorsque le capot mobile 206b est en position fermée, le deuxième bord 214 s'étend contre le premier bord 212 et le capot mobile 206b prolonge la partie fixe 206a afin de former une surface continue. Lorsque le capot mobile 206b est en position ouverte, le deuxième bord 214 est écarté du premier bord 212 et le capot mobile 206b est écarté vers l'extérieur de la partie fixe 206a, c'est-à-dire en travers de la veine secondaire et permet l'accès à l'intérieur du noyau central 202.

Dans le mode de réalisation de l'invention présenté à la Fig. 2, il y a un premier type de ferrure en col de cygne 209a et un deuxième type de ferrure en col de cygne 209b, et chaque ferrure en col de cygne 209a-b prend globalement la forme d'un C.

La ferrure en col de cygne 209a du premier type comporte une extrémité qui est solidaire de manière rigide du capot mobile 206b et une autre extrémité qui est montée articulée sur la structure fixe 50 et sous la partie fixe 206a, c'est-à-dire du côté opposé à la veine secondaire.

La ferrure en col de cygne 209b du deuxième type comporte une extrémité qui est montée articulée sur le capot mobile 206b et une autre extrémité qui est montée articulée sur la structure fixe 50 et sous la partie fixe 206a, c'est-à-dire du côté opposé à la veine secondaire. La ferrure en col de cygne 209b du deuxième type à deux articulations permet un certain débattement lors de la manœuvre du capot mobile 206b.

Chaque articulation d'une ferrure en col de cygne 209a-b est réalisée par l'intermédiaire d'une liaison pivot réalisée, par exemple, sous forme d'une chape.

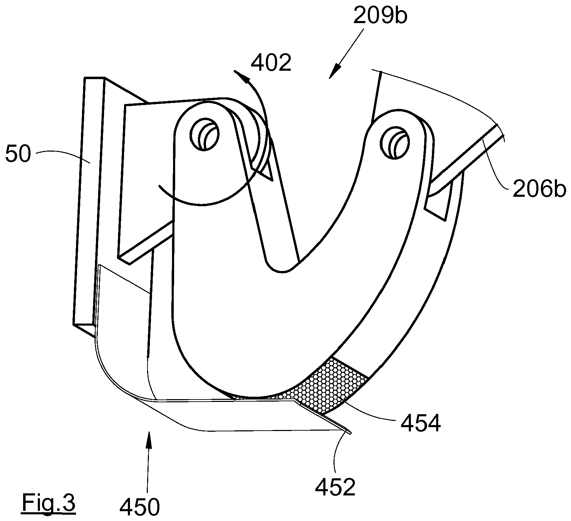

Selon l'invention et en référence avec la Fig.3, le turboréacteur double flux 110 présente des moyens anti-vibrations 450 qui empêchent les vibrations de la ferrure en col de cygne 209b du deuxième type lorsque le capot mobile 206b est en position fermée. Les moyens anti-vibrations 450 sont ainsi prévus pour exercer une pression sur la ferrure en col de cygne 209b du deuxième type pour la bloquer.

On notera que la Fig.3 montre une ferrure en col de cygne 209b du deuxième type lorsque le capot mobile 206b est en position fermée. La flèche 402 matérialise la rotation de la ferrure en col de cygne 209b du deuxième type lors de l'ouverture du capot mobile 206b.

Les moyens anti-vibrations 450 prennent la forme d'une lame ressort courbée en L dont une première extrémité est fixée à la structure fixe 50 et dont une deuxième extrémité est libre. La lame ressort est disposée de manière à ce que la deuxième extrémité soit en appui contre la ferrure en col de cygne 209b lorsque le capot mobile 206b est en position fermée et de manière à ce que la ferrure en col de cygne 209b n'est pas en contact avec la lame ressort lorsque le capot mobile 206b quitte la position fermée.

Lorsque le capot mobile 206b est en position fermée, la ferrure en col de cygne 209b force contre la deuxième extrémité de manière à l'écarter de sa position de repos et à la mettre en contrainte.

Pour faciliter l'écartement de la lame ressort lors de l'approche de la ferrure en col de cygne 209b, la deuxième extrémité présente un plan incliné 452 orienté vers l'extérieur.

Pour protéger la surface de la ferrure en col de cygne 209b contre laquelle frotte la lame ressort, un patin de protection 454, par exemple en téflon, est apposé contre cette surface.

Les moyens anti-vibrations 450 peuvent être complétés par des moyens additionnels (non représentés), comme par exemple une pince fixée à la structure fixe 50 et une languette solidaire de la ferrure en col de cygne 209b. La pince présente deux branches en acier ressort et elle est disposée de manière à ce que la languette se positionne entre les deux branches lorsque le capot mobile 206b est en position fermée et sorte de la pince 352 lorsque le capot mobile 206b quitte la position fermée.

L'invention a été plus particulièrement décrite dans le cas d'un capot intérieur constituant une paroi intérieure de la veine secondaire, mais elle peut s'appliquer de la même manière à un capot extérieur constituant une paroi extérieure de la veine secondaire.

## Revendications

1. Turboréacteur double flux (110) pour un aéronef (100), ledit turboréacteur double flux (110) comportant :
- une structure fixe (50),
- un noyau central (202) constituant le moteur,
- un capot (206) qui constitue une paroi d'une veine secondaire s'étendant autour du noyau central, le capot (206) comportant une partie fixe (206a) solidaire de la structure fixe et un capot mobile (206b) monté mobile en rotation sur la structure fixe (50) par l'intermédiaire d'au moins une charnière avec ferrure en col de cygne (208) entre une position ouverte et une position fermée, au moins une desdites au moins une charnière avec ferrure en col de cygne (208) comportant une ferrure en col de cygne (209b) présentant une extrémité montée articulée sur le capot mobile (206b) et une extrémité montée articulée sur la structure fixe (50),
pour la ou chaque ferrure en col de cygne (209b), le turboréacteur double flux (110) comporte des moyens anti-vibrations (450) qui sont prévus pour exercer une pression contre la ferrure en col de cygne (209b) lorsque le capot mobile (206b) est en position fermée, **caractérisé en ce que** les moyens anti-vibrations (450) prennent la forme d'une lame ressort courbée en L dont une première extrémité est fixée à la structure fixe (50) et dont une deuxième extrémité est libre, **en ce que** la deuxième extrémité est en appui contre la ferrure en col de cygne (209b) lorsque le capot mobile (206b) est en position fermée et **en ce que** la ferrure en col de cygne (209b) n'est pas en contact avec la lame ressort lorsque le capot mobile (206b) quitte la position fermée.

2. Turboréacteur double flux (110) selon la revendication 1, **caractérisé en ce qu'**il comporte un patin de protection (454) apposé contre la surface de la ferrure en col de cygne (209b) contre laquelle frotte la lame ressort.

3. Turboréacteur double flux (110) selon l'une des revendications 1 à 2, **caractérisé en ce que** le capot (206) est un capot intérieur (206) qui constitue une paroi intérieure de la veine secondaire.

4. Turboréacteur double flux (110) selon l'une des revendications 1 à 3, **caractérisé en ce que** le capot est un capot extérieur qui constitue une paroi extérieure de la veine secondaire.

5. Aéronef (100) comportant au moins un turboréacteur double flux (110) selon l'une des revendications précédentes.

## Patentansprüche

1. Zweistrom-Turbinen-Luftstrahltriebwerk (110) für ein Flugzeug (100), wobei das Zweistrom-Turbinen-Luftstrahltriebwerk (110) umfasst:
- eine feststehende Struktur (50),
- einen zentralen Kern (202), welcher das Triebwerk bildet,
- eine Abdeckung (206), welche eine Wand eines sekundären Tunnels bildet, welcher sich um den zentralen Kern herum erstreckt, wobei die Abdeckung (206) einen feststehenden Abschnitt (206a), welcher fest mit der feststehenden Struktur verbunden ist, und eine bewegliche Abdeckung (206b) umfasst, welche an der feststehenden Struktur (50) mit Hilfe von mindestens einem Scharnier mit Schwanenhalsbeschlag (208) drehbeweglich zwischen einer offenen Position und einer geschlossenen Position montiert ist, wobei mindestens eines des mindestens einen Scharniers mit Schwanenhalsbeschlag (208) einen Schwanenhalsbeschlag (209b) umfasst, welcher ein an der beweglichen Abdeckung (206b) gelenkig montiertes Ende und ein an der feststehenden Struktur (50) gelenkig montiertes Ende aufweist,
für den oder jeden Schwanenhalsbeschlag (209b) umfasst das Zweistrom-Turbinen-Luftstrahltriebwerk (110) Antivibrationsmittel (450), welche dafür vorgesehen sind, um einen Druck auf den Schwanenhalsbeschlag (209b) auszuüben, wenn sich die bewegliche Abdeckung (206b) in geschlossener Position befindet, **dadurch gekennzeichnet, dass** die Antivibrationsmittel (450) die Form eines zu einem L gebogenen Federblattes annehmen, von dem ein erstes Ende an der feststehenden Struktur (50) befestigt ist und von dem ein zweites Ende frei ist, dass das zweite Ende an dem Schwanenhalsbeschlag (209b) anliegt, wenn sich die bewegliche Abdeckung (206b) in der geschlossenen Position befindet, und dass sich der Schwanenhalsbeschlag (209b) nicht in Kontakt mit dem Federblatt befindet, wenn die bewegliche Abdeckung (206b) die geschlossene Position verlässt.

2. Zweistrom-Turbinen-Luftstrahltriebwerk (110) nach Anspruch 1, **dadurch gekennzeichnet, dass** es eine Schutzkufe (454) umfasst, welche an der Fläche des Schwanenhalsbeschlags (209b) angebracht ist, gegen welche das Federblatt reibt.

3. Zweistrom-Turbinen-Luftstrahltriebwerk (110) nach einem der Ansprüche 1 bis 2, **dadurch gekennzeichnet, dass** die Abdeckung (206) eine innere Abdeckung (206) ist, welche eine innere Wand des sekundären Tunnels bildet.

4. Zweistrom-Turbinen-Luftstrahltriebwerk (110) nach einem der Ansprüche 1 bis 3, **dadurch gekennzeichnet, dass** die Abdeckung eine äußere Abdeckung ist, welche eine äußere Wand des sekundären Tunnels bildet.

5. Flugzeug (100), umfassend mindestens ein Zweistrom-Turbinen-Luftstrahltriebwerk (110) nach einem der vorhergehenden Ansprüche.

## Claims

1. Bypass turbojet engine (110) for an aircraft (100), the said bypass turbojet engine (110) comprising:
- a fixed structure (50),
- a central core (202) constituting the engine,
- a cowl (206) which constitutes a wall of a secondary (bypass) flow path extending around the central core, the cowl (206) comprising a fixed part (206a) secured to the fixed structure and a mobile cowl (206b) mounted with the ability to rotate on the fixed structure (50) via at least one hinge with gooseneck fitting (208), between an open position and a closed position, at least one of the said at least one hinges with gooseneck fitting (208) comprising a gooseneck fitting (209b) having one end mounted in an articulated manner on the mobile cowl (206b) and one end mounted in an articulated manner on the fixed structure (50),
for the or each gooseneck fitting (209b), the bypass turbojet engine (110) comprises anti-vibration means (450) which are intended to exert pressure against the gooseneck fitting (209b) when the mobile cowl (206b) is in the closed position, **characterized in that** the anti-vibration means (450) adopts the shape of a spring leaf bent into an L-shape a first end of which is fixed to the fixed structure (50) and a second end of which is free, **in that** the second end rests against the gooseneck fitting (209b) when the mobile cowl (206b) is in closed position, and **in that** the gooseneck fitting (209b) is not in contact with the spring leaf when the mobile cowl (206b) leaves the closed position.

2. Bypass turbojet engine (110) according to Claim 1, **characterized in that** it comprises a protective pad (454) affixed against the surface of the gooseneck fitting (209b) against which the spring leaf rubs.

3. Bypass turbojet engine (110) according to either of Claims 1 and 2, **characterized in that** the cowl (206) is an inner cowl (206) which constitutes an interior wall of the secondary (bypass) flow path.

4. Bypass turbojet engine (110) according to one of Claims 1 to 3, **characterized in that** the cowl is an outer cowl which constitutes an exterior wall of the secondary (bypass) flow path.

5. Aircraft (100) comprising at least one bypass turbojet engine (110) according to one of the preceding claims.
